# EUROPEAN PATENT APPLICATION

(11) **EP 4 435 763 A2**
(43) Date of publication of application: **25.09.2024**
(21) Application number: 22914649.3
(22) Date of filing: 26.12.2022
(51) Int. Cl.: G09F 9/00

(54) **FOLDABLE TERMINAL**

(30) Priority: 29.12.2021 CN 202111681700
(71) Applicant: Huawei Technologies Co., Ltd., Shenzhen, Guangdong 518129 (CN)
(72) Inventor: YI, Yuan, Shenzhen, Guangdong 518129 (CN)
(74) Representative: Thun, Clemens
(86) International application number: PCT/CN2022/141873
(87) International publication number: WO 2023/125395

(57) **Abstract**

This application provides a foldable terminal. The foldable terminal includes a display portion, a hinge portion, and a non-display portion. The display portion and the non-display portion are connected to two sides of the hinge portion. The display portion includes a display screen assembly and an adapter circuit board, where the adapter circuit board is electrically connected to the display screen assembly. The non-display portion includes a display drive board. The adapter circuit board is connected to the display drive board via a flexible connecting member. The hinge portion has an accommodating slot, and the flexible connecting member is located in the accommodating slot. A first wall surface is provided on a side that is of the accommodating slot and that faces the non-display portion, a second wall surface is provided on a side that is of the accommodating slot and that faces away from the non-display portion, and the flexible connecting member is located between the first wall surface and the second wall surface. In this way, the flexible connecting member is not exposed potentially and is not prone to be damaged. An opening is provided on a side that is of the accommodating slot and that faces the non-display portion. In the opening region, a distance between the first wall surface and the second wall surface gradually increases in a direction close to the non-display portion, so that reverse bending of the flexible connecting member is not prone to occur when the terminal is folded.

## Description

### CROSS-REFERENCE TO RELATED APPLICATIONS

This application claims priority to Chinese Patent Application No. 202111681700.8, filed with the China National Intellectual Property Administration on December 29, 2021 and entitled "FOLDABLE TERMINAL", which is incorporated herein by reference in its entirety.

### TECHNICAL FIELD

This application relates to the field of electronic device technologies, and in particular, to a foldable terminal.

### BACKGROUND

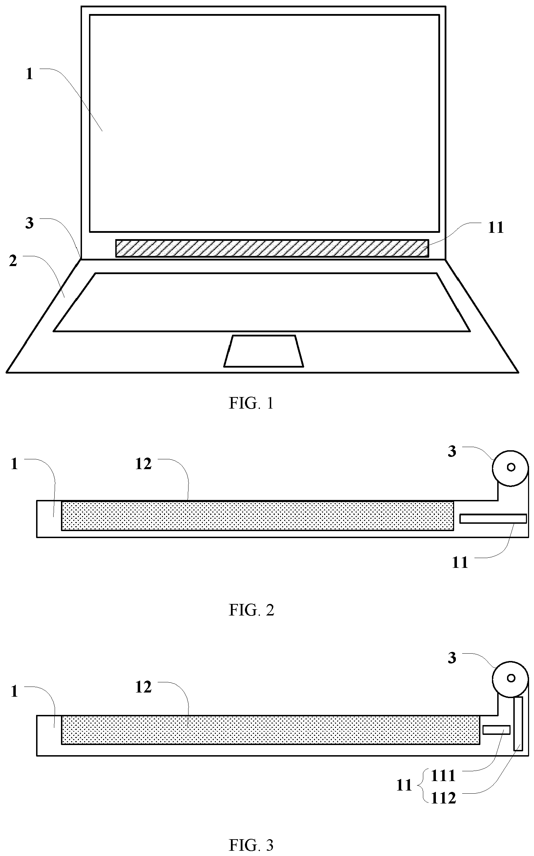

FIG. 1 is a diagram of a structure of a portable computer in the conventional technology. As shown in FIG. 1, the portable computer usually includes a display portion 1 and a non-display portion 2. A hinge portion 3 is disposed between the display portion 1 and the non-display portion 2 for folding and unfolding of the display portion 1 and the non-display portion 2. The display portion 1 has a display drive board 11. The display drive board 11 is connected to a display screen assembly 12 of the display portion 1, and is configured to drive the display screen assembly 12 for displaying. The display drive board 11 is specifically disposed on the display portion 1. The non-display portion 2 is further provided with a mainboard (not shown in the figure), the mainboard is configured to drive the entire portable computer to operate, and the display drive board 11 is connected to the mainboard.

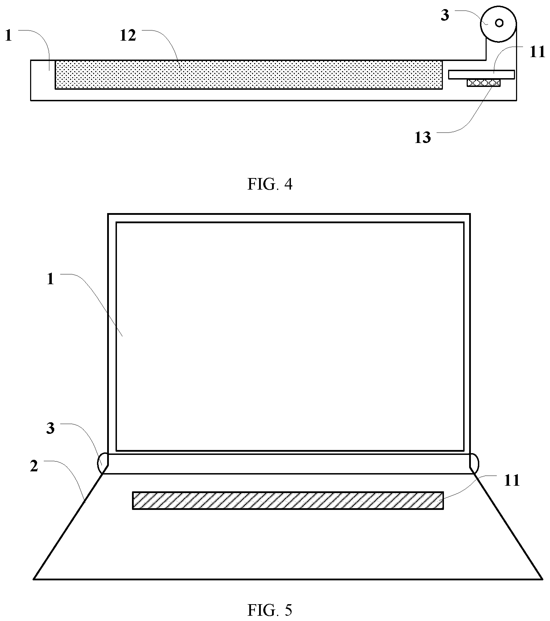

FIG. 2 to FIG. 4 show several manners of disposing a display drive board in the conventional technology. As shown in FIG. 2, if the display drive board 11 and the display screen assembly 12 are disposed in parallel, a large area of the display portion 1 is occupied, and it is difficult to increase a screen-to-body ratio. As shown in FIG. 3, the display drive board 11 may include a first drive board 111 and a second drive board 112. The first drive board 111 and the display screen assembly 12 are disposed in parallel, and the second drive board 112 and the display screen assembly 12 are vertically disposed. This solution can improve a screen-to-body ratio of the display portion 1 to some extent, but has minimal effect. In addition, this solution further causes an increase in a thickness of the hinge portion 3, which in turn causes an increase in a thickness of the entire portable computer. As shown in FIG. 4, to connect the display drive board 11 to the mainboard, the display portion 1 is further provided with a connector 13. The connector 13 is stacked with the display drive board 11 and then connected to the mainboard through a cable. In this solution, the connector 13 also occupies thickness space of the display portion 1, leading to an increase in a thickness of the display portion 1.

With an increase in requirements, the screen-to-body ratio and thickness are important indicators for measuring performance of a portable computer. Therefore, increasing a screen-to-body ratio of a display portion while controlling a thickness of a device is a technical problem to be resolved urgently.

### SUMMARY

This application provides a foldable terminal, to improve a screen-to-body ratio of a display portion, improve appearance simplicity of the foldable terminal, reduce damage to a flexible connecting member, and improve a service life of the flexible connecting member.

This application provides a foldable terminal. The foldable terminal includes a display portion, a hinge portion, and a non-display portion. The display portion and the non-display portion are connected to two sides of the hinge portion, and foldable connection is implemented via the hinge portion. The display portion includes a display screen assembly and an adapter circuit board. The display screen assembly is configured to display an image, and may be further configured to implement human-machine interaction. The adapter circuit board is electrically connected to the display screen assembly, and is configured to transmit an electrical signal. The non-display portion includes a bottom cover, a top cover, and a display drive board. The bottom cover and the top cover are snap-fitted to form an accommodating cavity, and the display drive board is disposed in the accommodating cavity. The adapter circuit board is connected to the display drive board via a flexible connecting member, and the display drive board transmits a drive signal to the display screen assembly via the adapter circuit board, to drive the display screen assembly to work. The hinge portion has an accommodating slot, and the flexible connecting member is located in the accommodating slot. A first wall surface is provided on a side that is of the accommodating slot and that faces the accommodating cavity, and a second wall surface is provided on a side that is of the accommodating slot and that faces away from the accommodating cavity. In this case, the flexible connecting member is located between the first wall surface and the second wall surface. Specifically, it may be considered that a side that is of the flexible connecting member and that faces the accommodating cavity is opposite to the first wall surface, and a side that is of the flexible connecting member and that faces away from the accommodating cavity is opposite to the second wall surface. In this solution, the flexible connecting member is located between the first wall surface and the second wall surface, and the first wall surface and the second wall surface of the accommodating slot may block the flexible connecting member. The flexible connecting member is not exposed potentially, and appearance simplicity of the foldable terminal is improved. In addition, the flexible connecting member may be protected, so that the flexible connecting member is not prone to be damaged, and a service life of the flexible connecting member is prolonged. Moreover, an opening is provided on a side that is of the accommodating slot and that faces the non-display portion. In the opening region, a distance between the first wall surface and the second wall surface gradually increases in a direction close to the non-display portion. It may be considered that the flexible connecting member extends from the adapter circuit board to the display drive board, and the opening is gradually enlarged. In this case, the flexible connecting member may be bent within a large range of the opening, and reverse bending is not prone to occur, so that the flexible connecting member is not prone to be damaged due to repeated bending, and a service life of the flexible connecting member is improved.

In a specific technical solution, the hinge portion includes a first hinge portion and a second hinge portion. The first hinge portion is located on an outer side of the second hinge portion, and the accommodating slot is formed between the first hinge portion and the second hinge portion, so that two sides of the flexible connecting member have the first hinge portion and the second hinge portion respectively.

In an optional technical solution, the non-display portion further includes a stopper. The stopper is disposed in the accommodating cavity. To be specific, the stopper is disposed between the top cover and the bottom cover. Specifically, the stopper may be installed on the top cover, or may be installed on the bottom cover. This is not limited in this application. The stopper is specifically located between the display drive board and the hinge portion. In other words, the flexible connecting member needs to pass through the stopper to extend from the accommodating slot to the display drive board. Specifically, the stopper has a limiting port, and the flexible connecting member passes through the limiting port. The limiting port may limit a movement trajectory of the flexible connecting member, to reduce interference between the flexible connecting member and another structure, and reduce cases such as pulling, friction, or damage of the flexible connecting member. In addition, the limiting port may further prevent the flexible connecting member from popping out from the accommodating cavity between the bottom cover and the top cover, to ensure a bending path of the flexible connecting member.

When the foregoing stopper is specifically disposed, a distance between the limiting port formed by the stopper and the bottom cover may be greater than a distance between the limiting port and the top cover. In other words, the limiting port is located above the accommodating cavity. When the display portion and the non-display portion are in a folded state, a distance between the opening of the accommodating slot and the bottom cover is less than a distance between the opening and the top cover. In other words, the opening is located below the accommodating cavity. From a direction of the bottom cover of the non-display portion, it is not likely to visually see the flexible connecting member. In addition, the flexible connecting member is protected, so that the flexible connecting member is not prone to be damaged by an outer object.

The display drive board has a connecting portion, and the flexible connecting member is disposed around the connecting portion and is electrically connected to the connecting portion. Specifically, it may be considered that the connecting portion has a first end and a second end that face away from each other, and the second end is located on a side that is of the first end and that faces away from the hinge portion. In a specific technical solution, after extending out from the opening of the accommodating slot, the flexible connecting member passes through an upper part of the connecting portion to bypass the second end, and then passes through a lower part of the connecting portion to be electrically connected to the first end. In this solution, after the flexible connecting member is connected to the display drive board, a U-shaped bending structure may be formed by bypassing the connecting portion. In this way, pulling on the first end of the connecting portion can be reduced, strength of a connection between the flexible connecting member and the connecting portion can be improved, and a regular movement trajectory of the flexible connecting member can be maintained.

The non-display portion further includes a support. The support includes a first support portion, the first support portion is disposed on a side that is of the second end and that faces away from the first end, and the first support portion protrudes from a surface that is of the display drive board and that faces the top cover. In other words, a distance between a surface that is of the first support portion and that faces a direction of the top cover and the top cover is less than a distance between the surface that is of the display drive board and that faces the direction of the top cover and the top cover. The flexible connecting member is disposed around the first support portion, and the first support portion may support the flexible connecting member, so that the flexible connecting member and the display drive board are not easily scratched, to reduce damage to the flexible connecting member and the display drive board, and improve a service life of the flexible connecting member and the display drive board.

The support of the non-display portion may include a second support portion. The second support portion is disposed on a side that is of the first end and that faces away from the second end, and the flexible connecting member bypasses the second support portion. The second support portion may limit a bending path of the flexible connecting member, to prevent relative displacement between the flexible connecting member and the display drive board, and improve a service life of the display drive board.

In an optional technical solution, the flexible connecting member between the first end of the connecting portion and the second support portion is flattened. In this solution, bending of the flexible connecting member in a connection area between the flexible connecting member and the display drive board can be reduced, to improve connection strength between the flexible connecting member and the display drive board.

The flexible connecting member is fastened to a side that is of the display drive board and that faces a rear cover via a middle member, so that the flexible connecting member is fastened to the first end of the display drive board, and relative displacement is not easily caused, thereby improving connection strength between the flexible connecting member and the display drive board.

A specific structure and form of the middle member are not specifically limited. For example, the middle member includes at least one of an adhesive layer, foam, a flexible pad, a gasket, a support, or the like.

A specific type of the flexible connecting member is not limited. For example, the flexible connecting member may be a cable, or may be a flexible circuit board, and may be specifically designed as required.

When the flexible connecting member is a flexible circuit board, the second hinge portion may have a radian surface at the opening, and a radius R of any area on the radian surface and a thickness d of the flexible circuit board meet R≥12d. When the display portion and the non-display portion are in a folded state, a bending angle of the flexible circuit board is large, and the flexible circuit board is not easily folded at a small angle. In this case, the flexible circuit board is not prone to be damaged, and a service life of the flexible circuit board is improved.

The flexible circuit board includes a bending region and a fastening region. The fastening region includes a first flexible insulation layer, a first conductive layer, a substrate, a second conductive layer, and a second flexible insulation layer that are sequentially disposed in a laminated manner. The bending region includes the first flexible insulation layer, the first conductive layer, the substrate, and the second flexible insulation layer that are sequentially disposed in a laminated manner. To be specific, compared with the fastening region, the bending region lacks a conductive layer. This reduces a rebound force of the bending region, and facilitates bending of the bending region. In addition, the flexible circuit board includes two flexible insulation layers, so that tensile resistance of the flexible circuit board can be improved.

In another optional technical solution, the flexible circuit board includes the bending region and the fastening region, and the bending region has a hollow structure. The hollow structure may reduce the rebound force of the bending region, and facilitate bending of the bending region.

In a specific technical solution, the flexible circuit board includes the bending region and the fastening region, and a rebound force of the bending region is 40 mN/mm to 100 mN/mm. In this range, the rebound force is suitable for bending of the flexible circuit board. This ensures that the bending region can form a stable bending trajectory, and helps prevent obvious friction between the bending region and other structures.

### BRIEF DESCRIPTION OF DRAWINGS

FIG. 1 is a diagram of a structure of a foldable terminal in the conventional technology;
FIG. 2 is a diagram of a sectional structure of a keyboard portion in the conventional technology;
FIG. 3 is a diagram of another sectional structure of a keyboard portion in the conventional technology;
FIG. 4 is a diagram of another sectional structure of a keyboard portion in the conventional technology;
FIG. 5 is a diagram of a structure of a foldable terminal according to an embodiment of this application;
FIG. 6 is a diagram of a partial sectional structure of a foldable terminal according to an embodiment of this application;
FIG. 7 is a diagram of another partial sectional structure of a foldable terminal according to an embodiment of this application;
FIG. 8 is a schematic lateral sectional view of a foldable terminal according to an embodiment of this application;
FIG. 9 is another schematic lateral sectional view of a foldable terminal according to an embodiment of this application;
FIG. 10 is another schematic lateral sectional view of a foldable terminal according to an embodiment of this application;
FIG. 11 is another schematic lateral sectional view of a foldable terminal according to an embodiment of this application;
FIG. 12 is another schematic lateral sectional view of a foldable terminal according to an embodiment of this application;
FIG. 13 is another schematic lateral sectional view of a foldable terminal according to an embodiment of this application;
FIG. 14 is a diagram of a structure of a first hinge portion according to an embodiment of this application;
FIG. 15 is another schematic lateral sectional view of a foldable terminal according to an embodiment of this application;
FIG. 16 is a diagram of a sectional view of a structure of a flexible circuit board according to an embodiment of this application; and
FIG. 17 is a diagram of another top view of a structure of a flexible circuit board according to an embodiment of this application.

### Reference numerals:

1: display portion; 11: display drive board;
111: first drive board; 112: second drive board;
113: connecting portion; 1131: first end;
1132: second end; 12: display screen assembly;
13: connector; 14: adapter circuit board;
2: non-display portion; 21: bottom cover;
22: top cover; 23: stopper;
231: limiting port; 24: support;
241: first support portion; 242: second support portion;
243: auxiliary support; 3: hinge portion;
31: first hinge portion; 311: first auxiliary portion;
32: second hinge portion; 33: accommodating slot;
331: opening; 4: flexible connecting member;
41: flexible circuit board; 411: bending region;
412: fastening region; 413: first flexible insulation layer;
414: first conductive layer; 415: substrate;
416: second conductive layer; 417: second flexible insulation layer;
418: hollow structure.

### DESCRIPTION OF EMBODIMENTS

To make the objectives, technical solutions, and advantages of this application clearer, the following further describes this application in detail with reference to the accompanying drawings.

Terms used in the following embodiments are only intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly.

Reference to "an embodiment", "a specific embodiment", or the like described in this specification indicates that one or more embodiments of this application include a specific feature, structure, or characteristic described with reference to embodiments. The terms "include", "comprise", and "have", and variants thereof all mean "include but are not limited to", unless otherwise specifically emphasized in another manner.

To facilitate understanding of a foldable terminal provided in embodiments of this application, the following first describes an application scenario of the foldable terminal. A display screen is already a structure of many terminals, and is configured to display information or implement interaction with a user. To implement portability or reduce occupied space of a terminal, a current terminal includes a foldable terminal. Specifically, the foldable terminal includes a display portion and a non-display portion. The display portion is a portion on which a display screen assembly is disposed, and the non-display portion is a portion on which no display screen assembly is disposed. To implement a display function of the display screen, the display screen assembly needs to be connected to a display drive board, to drive the display screen assembly for displaying. The display drive board and the display screen assembly are both disposed in the display portion, facilitating a connection between the display drive board and the display screen assembly. However, the display drive board occupies large space of the display portion, bringing difficulties in increasing a screen-to-body ratio of the display portion, and bringing difficulties in thinning the display portion. However, currently, a high screen-to-body ratio and thinning of a display portion are both important development trends. Therefore, this application provides a foldable terminal, to resolve a disposing problem of the foregoing display drive board. This increases the screen-to-body ratio of the display portion and reduces a thickness of the display portion. The following lists embodiments to describe the foldable terminal in technical solutions of this application with reference to the accompanying drawings.

FIG. 5 is a diagram of a structure of a foldable terminal according to an embodiment of this application. As shown in FIG. 5, the foldable terminal in this embodiment of this application includes a display portion 1, a hinge portion 3, and a non-display portion 2. The hinge portion 3 is connected between the display portion 1 and the non-display portion 2, to implement a foldable connection between the display portion 1 and the non-display portion 2. In a specific embodiment, a specific type of the foldable terminal is not limited. The foldable terminal may be a structure such as a notebook computer or a foldable display having a display screen. It may be understood that the display portion 1 is a portion that is of the foldable terminal and that has a display screen. The non-display portion 2 is a portion that is connected to the display portion 1 in a foldable manner, and usually no display screen is disposed. For example, when the foldable terminal is a notebook computer, the display portion 1 is a display side having a display screen assembly 12, and the non-display portion 2 is a keyboard side having a keyboard. When the foldable terminal is a foldable display, the display portion 1 is a display side having the display screen assembly 12, and the non-display portion 2 is a supporting portion configured to support the display portion 1.

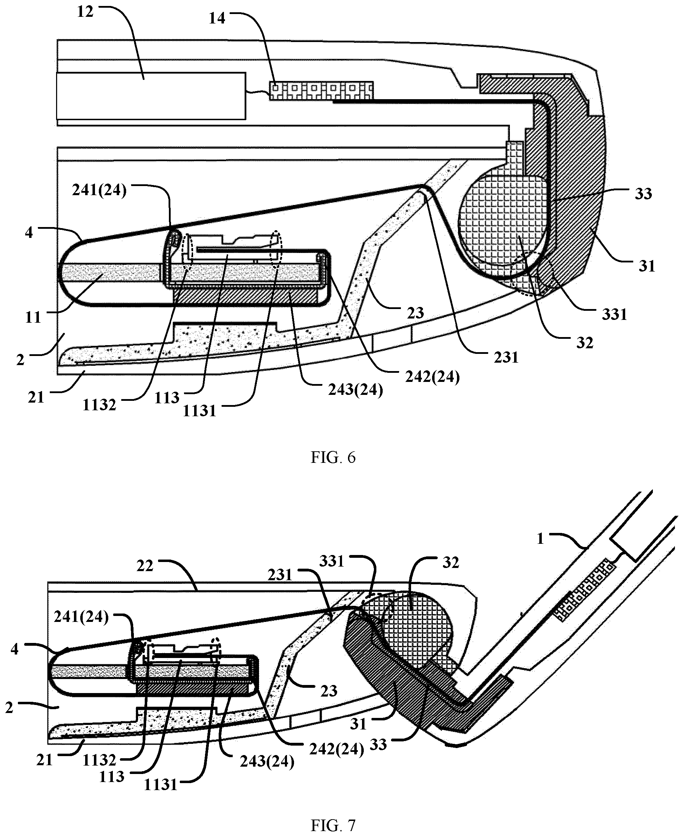

FIG. 6 is a diagram of a partial sectional structure of a foldable terminal according to an embodiment of this application. FIG. 6 is a diagram of a sectional structure of a display portion 1 and a non-display portion 2 of the foldable terminal in a folded state. FIG. 7 is a diagram of another partial sectional structure of a foldable terminal according to an embodiment of this application. FIG. 7 is a diagram of a sectional structure of a display portion 1 and a non-display portion 2 of the foldable terminal in an unfolded state.

Refer to FIG. 6 and FIG. 7. The non-display portion 2 includes a bottom cover 21, a top cover 22, and a display drive board 11. The bottom cover 21 and the top cover 22 form an accommodating cavity, and the display drive board 11 is disposed in the accommodating cavity. In other words, the display drive board 11 is disposed between the bottom cover 21 and the top cover 22. It may be understood that the top cover 22 may include a structure such as a keyboard, and the bottom cover 21 may also include a structure such as a ventilation hole. In other words, the bottom cover 21 and the top cover 22 are not limited to complete covers. The display portion 1 includes the display screen assembly 12 and an adapter circuit board 14. The display screen assembly 12 is electrically connected to the adapter circuit board 14. The adapter circuit board 14 is further electrically connected to the display drive board 11 via a flexible connecting member 4, to implement an electrical connection between the display drive board 11 and the display screen assembly 12 and transmit a signal between the display drive board and the display screen assembly 12. The adapter circuit board 14 and the display drive board 11 are respectively disposed on the display portion 1 and the non-display portion 2. Therefore, the flexible connecting member 4 needs to be folded and unfolded with the hinge portion 3.

The hinge portion 3 has an accommodating slot 33, and the accommodating slot 33 is configured to accommodate the flexible connecting member 4. The flexible connecting member 4 passes through the accommodating slot 33 of the hinge portion 3. One end of the flexible connecting member 4 is connected to the adapter circuit board 14, and the other end is connected to the display drive board 11, to transmit a signal between the display drive board 11 and the adapter circuit board 14. For example, a drive signal of the display drive board 11 is transmitted to the adapter circuit board 14, and then the display screen assembly 12 is driven to perform display. For the display screen assembly 12 having a touch component (not shown in the figure), the flexible connecting member 4 is further configured to transmit a touch signal of the touch component to the display drive board 11, to implement a touch function of the touch component. In embodiments of this application, the display drive board 11 is disposed in the non-display portion 2, and only the adapter circuit board 14 is disposed in the display portion 1. This helps improve a screen-to-body ratio of the display portion 1. A first wall surface is provided on a side that is of the accommodating slot 33 and that faces the accommodating cavity, and a second wall surface is provided on a side that is of the accommodating slot 33 and that faces away from the accommodating cavity. The foregoing flexible connecting member 4 is located in the accommodating slot 33. The flexible connecting member 4 is opposite to the first wall surface of the accommodating slot 33 on an inner side and the flexible connecting member 4 is opposite to the second wall surface of the accommodating slot 33 on an outer side. Therefore, whether the display portion 1 and the non-display portion 2 are in an unfolded state or a folded state, the flexible connecting member 4 is not in an exposed state. The solution can improve appearance simplicity of the foldable terminal and reduce damage to the flexible connecting member 4, thereby improving a service life of the flexible connecting member.

In a specific embodiment, a thickness of the display portion 1 of the notebook computer using the technical solution of this application may be less than 5 mm, and a screen-to-body ratio may be greater than 92%. Therefore, this solution can improve performance of the foldable terminal to a large extent.

In a specific embodiment, the hinge portion 3 includes a first hinge portion 31 and a second hinge portion 32. The first hinge portion 31 is located on an outer side of the second hinge portion 32, and the first hinge portion 31 and the second hinge portion 32 form an accommodating slot 33. A structure of the hinge portion in this solution is simple. This helps reduce costs of the foldable terminal. It should be noted that the first hinge portion 31 is located on the outer side of the second hinge portion 32. The "outer side" herein means that the first hinge portion 31 is located on the outer side of the second hinge portion 32 compared with the second hinge portion 32. The first hinge portion 31 is not necessarily on an outer surface of the entire foldable terminal, or the first hinge portion 31 is not necessarily in an exposed state. Optionally, the foldable terminal may further have a housing. The housing is located on a side that is of the first hinge portion 31 and that is away from the second hinge portion 32. In other words, the housing may wrap the first hinge portion 31, so that the first hinge portion 31 is not in an exposed state.

One end of the hinge portion 3 is connected to the display portion 1, and the other end is connected to the non-display portion 2, so that the display portion 1 and the non-display portion 2 can be folded and unfolded. One end of the flexible connecting member 4 is connected to the adapter circuit board 14 of the display portion 1, and the other end is connected to the display drive board 11 of the non-display portion 2. The accommodating slot 33 is disposed in an extending manner between the display portion 1 and the non-display portion 2, and a part of an area between two ends of the flexible connecting member 4 is disposed in the accommodating slot 33. An opening 331 is provided on a side that is of the accommodating slot 33 and that faces the non-display portion 2. In the opening 331 region, a distance between the first wall surface and the second wall surface gradually increases in a direction close to the non-display portion 2. Refer to FIG. 6 and FIG. 7. When the display portion 1 and the non-display portion 2 are folded and unfolded, the flexible connecting member 4 swings in the opening 331. As shown in FIG. 6, when the display portion 1 and the non-display portion 2 are folded, the flexible connecting member 4 is close to the second hinge portion 32, or the flexible connecting member 4 may be in contact with the second hinge portion 32. In other words, the flexible connecting member 4 wraps a surface of the second hinge portion 32. As shown in FIG. 7, when the display portion 1 and the non-display portion 2 are unfolded, the flexible connecting member 4 is close to the first hinge portion 31, or the flexible connecting member 4 may be in contact with the first hinge portion 31, and the flexible connecting member 4 wraps a surface of the first hinge portion 31. The distance between the first wall surface and the second wall surface gradually increases in the direction close to the non-display portion 2. Therefore, in a process of folding and unfolding the display portion 1 and the non-display portion 2, a folding angle of the flexible connecting member 4 does not change by more than 180°. In other words, reverse bending is not prone to occur, so that a service life of the flexible connecting member 4 is improved.

Specifically, the distance between the first wall surface and the second wall surface is a distance between the first wall surface and the second wall surface that is shown in a sectional view of the foldable terminal that is perpendicular to a direction of the folded hinge. When the flexible connecting member 4 is of a sheet structure, the distance between the first wall surface and the second wall surface is a distance in a thickness direction of the flexible connecting member 4. The foregoing "gradually increases" means a change trend of a distance between the first wall surface and the second wall surface, but does not mean a uniform increase.

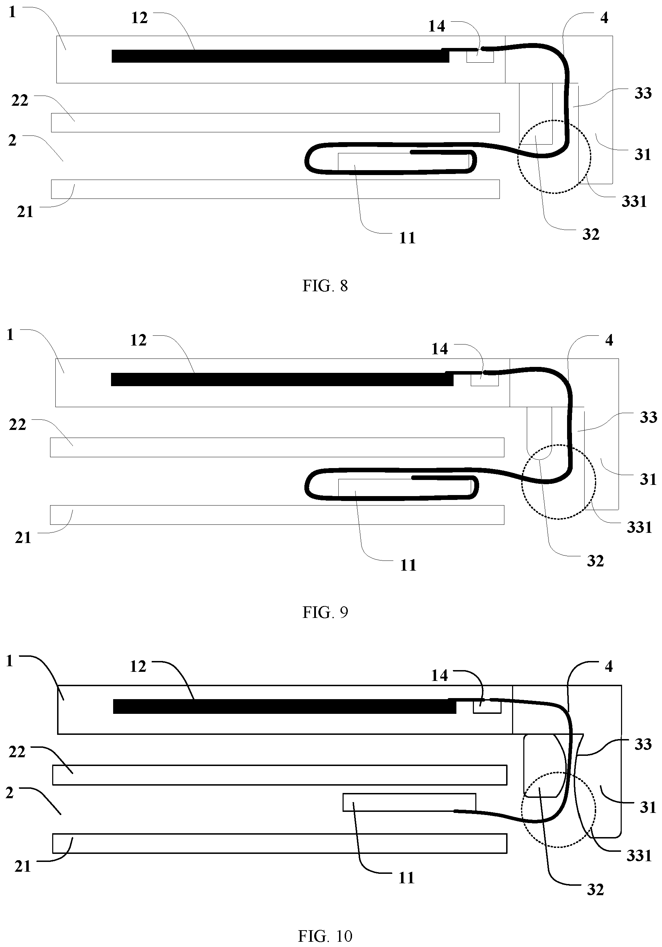

FIG. 8 to FIG. 13 are schematic lateral sectional views of a foldable terminal according to an embodiment of this application. As shown in FIG. 6 to FIG. 13, to form the opening 331 of the accommodating slot 33, the first hinge portion 31 and the second hinge portion 32 may have a plurality of structures. The following lists several optional embodiments.

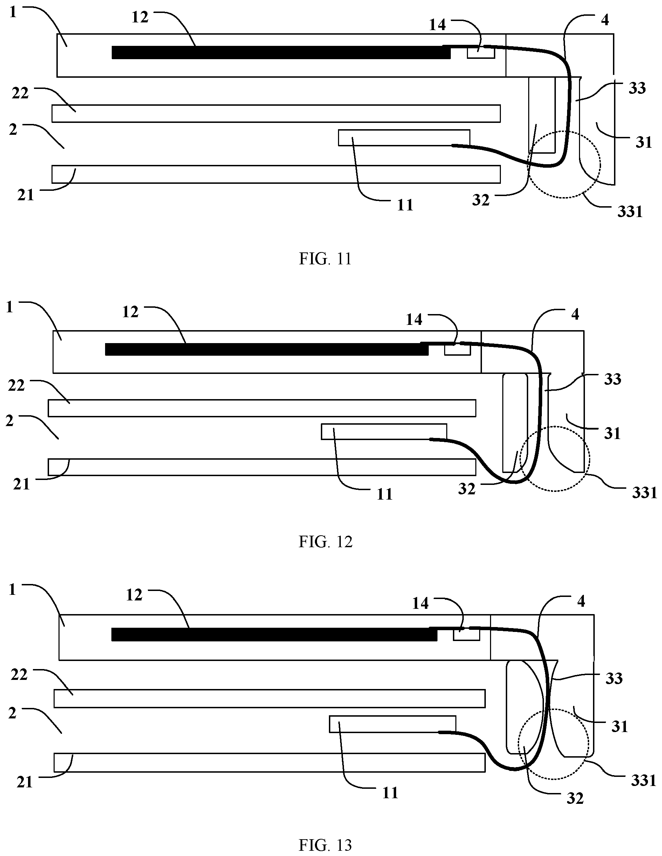

In embodiments shown in FIG. 8 to FIG. 11, a distance between an end face that is of the second hinge portion 32 and that faces the bottom cover 21 and a plane on which the bottom cover 21 is located is greater than a distance between an end face that is of the first hinge portion 31 and that faces the bottom cover 21 and the plane on which the bottom cover 21 is located; or a distance between the end face that is of the second hinge portion 32 and that faces the bottom cover 21 and a plane on which the top cover 22 is located is less than a distance between the end face that is of the first hinge portion 31 and that faces the bottom cover 21 and the plane on which a front cover is located. In a specific embodiment, a length of the second hinge portion 32 in a direction from the bottom cover 21 to the top cover 22 is less than a length of the first hinge portion 31 in the direction from the bottom cover 21 to the top cover 22. In this solution, the opening 331 is formed in a direction that is of the first hinge portion 31 and the second hinge portion 32 and that faces the bottom cover 21. In a specific embodiment, end faces of the first hinge portion 31 and the second hinge portion 32 may both be planes, as shown in FIG. 8. In another embodiment, the end face that is of the second hinge portion 32 and that faces a direction of the bottom cover 21 may be a semicircular surface, as shown in FIG. 9. Alternatively, in still another embodiment, a surface that is of the first hinge portion 31 and that faces the second hinge portion 32 has an arc-shaped surface, and a surface that is of the second hinge portion 32 and that faces the first hinge portion 31 has an arc-shaped surface, as shown in FIG. 10. In still another embodiment, only the end portion that is of the first hinge portion 31 and that faces the direction of the bottom cover 21 or the end portion that is of the second hinge portion 32 and that faces the direction of the bottom cover 21 may have an arc-shaped surface. For example, FIG. 11 shows that the end face that is of the first hinge portion 31 and that faces the direction of the bottom cover 21 has an arc-shaped surface.

In embodiments shown in FIG. 12 and FIG. 13, the end face that is of the first hinge portion 31 and that faces the bottom cover 21 and the end face that is of the second hinge portion 32 and that faces the bottom cover 21 are approximately on a same horizontal line. Alternatively, the distance between the end face that is of the first hinge portion 31 and that faces the bottom cover 21 and the plane on which the bottom cover 21 is located is approximately equal to the distance between the end face that is of the second hinge portion 32 and that faces the bottom cover 21 and the plane on which the bottom cover 21 is located. In this case, an oblique face, a cambered end face, a semicircular end face, or an irregular-shaped end face needs to be prepared at the end portion that is of the first hinge portion 31 and that faces the direction of the bottom cover 21 or the end portion that is of the second hinge portion 32 and that faces the direction of the bottom cover 21, to form the opening 331. Definitely, an oblique face, a cambered end face, a semicircular end face, or an irregular-shaped end face may also be prepared both at the end portion that is of the first hinge portion 31 and that faces the direction of the bottom cover 21 and the end portion that is of the second hinge portion 32 and that faces the direction of the bottom cover 21, to form the opening 331. For example, in the embodiment shown in FIG. 12, an arc-shaped surface is prepared on the end face that is of the first hinge portion 31 and that faces the direction of the bottom cover 21, and an arc-shaped port is also prepared on the end face that is of the second hinge portion 32 and that faces the direction of the bottom cover 21. Alternatively, in the embodiment shown in FIG. 13, a surface that is of the first hinge portion 31 and that faces the second hinge portion 32 has an arc-shaped surface, and a surface that is of the second hinge portion 32 and that faces the first hinge portion 31 has an arc-shaped surface.

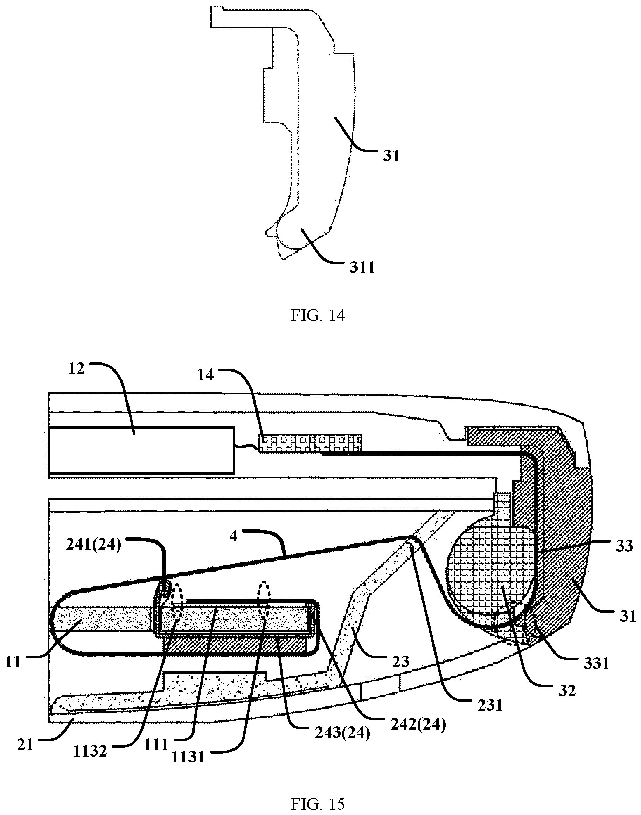

The foregoing embodiments are merely several optional embodiments, and expressions such as the arc-shaped surface, the semicircular surface, and the like are merely a change trend indicated by a structure, and are a guiding idea. In actual application, the foregoing surfaces may not be an arc-shaped surface or a semicircular surface in a strict sense. In addition, the first hinge portion 31 and the second hinge portion 32 may further have an auxiliary structure. For example, FIG. 6 and FIG. 7 show a specific embodiment. In this embodiment, it may be considered that the end face that is of the first hinge portion 31 and that faces the bottom cover 21 and the end face that is of the second hinge portion 32 and that faces the bottom cover 21 are approximately on a same horizontal line, and the end face of the second hinge portion 32 is an arc-shaped end face. FIG. 14 is a diagram of a structure of a first hinge portion according to an embodiment of this application. As shown in FIG. 14, to facilitate guiding a bending path of the flexible connecting member 4, a first auxiliary structure 311 is prepared on the end face that is of the first hinge portion 31 and that faces the bottom cover 21.

Still refer to FIG. 6 and FIG. 7. In an optional embodiment, the non-display portion 2 may further include a stopper 23. The stopper 23 is disposed in the accommodating cavity, and the display drive board 11 is disposed on a side that is of the stopper 23 and that faces away from the hinge portion 3. In other words, the flexible connecting member 4 may be connected to the display drive board 11 only after passing through a position of the stopper 23. Specifically, the stopper 23 has a limiting port 231, and the flexible connecting member 4 passes through the limiting port 231 to be connected to the display drive board 11. In this embodiment, the limiting port 231 of the stopper 23 may limit a movement trajectory of the flexible connecting member 4, to reduce interference between the flexible connecting member 4 and another structure, and reduce cases such as pulling or damage of the flexible connecting member 4. In addition, the limiting port 231 may further prevent the flexible connecting member 4 from popping out from the accommodating cavity between the bottom cover 21 and the top cover 22, to ensure a bending path of the flexible connecting member 4.

In a specific embodiment, the stopper 23 may be a baffle wall, and the limiting port 231 is made on the baffle wall. Alternatively, two baffle columns may be made, and the limiting port 231 is formed between the two baffle columns. In addition, a part of the structure of the limiting port 231 may be formed by using a structure already provided by the non-display portion 2. For example, as shown in FIG. 6 and FIG. 7, the stopper 23 is a baffle wall, and the baffle wall and a structure of the non-display portion 2 form the limiting port 231, to simplify the structure of the non-display portion 2.

When the limiting port 231 is specifically disposed, a distance between the limiting port 231 and the bottom cover 21 is greater than a distance between the limiting port 231 and the top cover 22. In other words, the limiting port 231 is located at an upper part of the non-display portion 2. When the display portion 1 and the non-display portion 2 are in a folded state, a distance between the opening 331 of the accommodating slot 33 and the bottom cover 21 is less than a distance between the opening 331 and the top cover 22. In other words, when the display portion 1 and the non-display portion 2 are in a folded state, the opening 331 of the accommodating slot 33 is located at a lower part of the non-display portion 2. In this embodiment, the bottom cover 21 of the non-display portion 2 may have a hollow portion, and the hollow portion may be opposite to the limiting port 231. Therefore, a distance between the flexible connecting member 4 at the limiting port 231 area and the hollow portion is long. Therefore, from a direction of the bottom cover of the non-display portion 2, it is not likely to visually see the flexible connecting member 4. In addition, the flexible connecting member 4 is protected, so that the flexible connecting member 4 is not prone to be damaged by an outer object.

Still refer to FIG. 6 and FIG. 7. The display drive board 11 has a connecting portion 113, and the flexible connecting member 4 is disposed around the connecting portion 113 and is electrically connected to the connecting portion 113. In a specific embodiment, the connecting portion 113 has a first end 1131 and a second end 1132 that face away from each other, and the second end 1132 is located on a side that is of the first end 1131 and that faces away from the hinge portion 3. To be specific, a distance between the first end 1131 and the hinge portion 3 is less than a distance between the second end 1132 and the hinge portion 3. After extending out from the opening 331 of the accommodating slot 33, the flexible connecting member 4 first passes through a direction (an upper part) that is of the connecting portion 113 and that faces the top cover 22, and then bypasses from the second end 1132 of the connecting portion 113 to a direction (a lower part) that is of the connecting portion 113 and that faces the bottom cover. Then, the flexible connecting member 4 is electrically connected to the connecting portion 113 from a direction of the first end 1131 of the connecting portion 113, and is further connected to the display drive board 11. Specifically, the flexible connecting member 4 may extend from the first end 1131 of the connecting portion 113 into the inside of the connecting portion 113. In this solution, the flexible connecting member 4 bypasses the connecting portion 113, and then forms a U-shaped bending structure, so that pulling on a connecting structure between the flexible connecting member 4 and the connecting portion 113 in a movement process of the flexible connecting member 4 can be reduced. This helps improve strength of a connection between the flexible connecting member 4 and the connecting portion 113 of the display drive board 11, so that a movement trajectory of the flexible connecting member 4 remains regular, and working reliability of the flexible connecting member 4 is ensured.

In a specific embodiment, a specific form of the connecting portion 113 is not limited. As shown in FIG. 6 and FIG. 7, the connecting portion 113 may be a connector, the flexible connecting member 4 is connected to the connector, and the connector is connected to the display drive board 11. Alternatively, in another embodiment, as shown in FIG. 15, the connecting portion 113 is a welding region. In other words, the flexible connecting member 4 is welded to the display drive board 11.

In a specific technical solution, the flexible connecting member 4 may pass between the display drive board 11 and the bottom cover 21, and a side that is of the display drive board 11 and that faces the bottom cover 21 is relatively flat. This helps improve flatness of the flexible connecting member 4.

Still refer to FIG. 6 and FIG. 7. The non-display portion 2 further includes a support 24. The support 24 includes a first support portion 241, and the first support portion 241 is disposed on a side that is of the second end 1132 of the connecting portion 113 and that faces away from the first end 1131. A distance between the bottom cover 21 and a surface that is of the first support portion 241 and that is away from a direction of the bottom cover 21 is greater than a distance between the bottom cover 21 and a surface that is of the display drive board 11 that is away from the direction of the bottom cover 21. In other words, the first support portion 241 protrudes from a surface that is of the display drive board 11 and that faces the top cover 22. The flexible connecting member 4 is disposed around the first support portion 241. In other words, the flexible connecting member 4 is connected to the first end 1131 of the connecting portion 113 of the display drive board 11, passes through the display drive board 11 from a lower part of the display drive board 11, bypasses the first support portion 241 from a lower part of the first support portion 241, passes through an upper part of the first support portion 241 and an upper part of the display drive board 11, sequentially passes through the limiting port 231 and the opening 331 to enter the accommodating slot 33, and then is connected to the adapter circuit board 14. In this solution, the first support portion 241 protrudes from the display drive board 11, and when the flexible connecting member 4 bypasses the upper part of the display drive member, the flexible connecting member 4 is not prone to scratch the display drive board 11. This helps improve a service life of the display drive board 11. Specifically, the display drive board 11 includes the connecting portion 113, and the first support frame 241 protrudes from a surface that is of the connecting portion 113 and that faces the top cover 22.

It should be noted that the foregoing orientation word "up", "down", or the like means an orientation of the foldable terminal in a state in FIG. 6 or FIG. 7. Specifically, the upper part of the display drive board 11 means a direction in which the display drive board 11 faces the top cover 22, and the lower part of the display drive board 11 means a direction in which the display drive board 11 faces the bottom cover 21.

Still refer to FIG. 6 and FIG. 7. In an embodiment, the support 24 may include a second support portion 242. The second support portion 242 is disposed on a side that is of the first end 1131 of the connecting portion 113 and that faces away from the second end 1132, and the flexible connecting member 4 bypasses the second support portion 242. In a specific embodiment, the flexible connecting member 4 may be connected to the connecting portion 113 from the first end 1131 of the connecting portion 113, pass through an upper part of the second support portion 242, sequentially pass through a lower part of the second support portion 242, a lower part of the connecting portion 113, and a lower part of the first support portion 241, pass through an upper part of the first support portion 241 and an upper part of the connecting portion 113, then sequentially pass through the limiting port 231 and the opening 331 to enter the accommodating slot 33, and then is connected to the adapter circuit board 14. In this solution, the second support portion 242 may limit a bending path of the flexible connecting member 4, to prevent relative displacement between the flexible connecting member 4 and the display drive board 11, and improve a service life of the display drive board 11.

In a specific embodiment, the flexible connecting member 4 may be kept in a flattened state in an area between the second support portion 242 and the display drive board 11. In this way, bending of the flexible connecting portion in a connection area between the flexible connecting portion and the display drive board 11 is reduced, to improve connection strength between the flexible connecting member 4 and the display drive board 11.

When the flexible connecting member 4 is specifically disposed, the flexible connecting member 4 may be fastened to a side that is of the display drive board 11 and that faces a rear cover via a middle member. In this solution, the flexible connecting member 4 is fastened to the connecting portion 113 of the display drive board 11 from a direction close to the first end 1131 of the connecting portion 113. In this case, the flexible connecting member 4 is fastened to the first end 1131 of the display drive board 11 of the connecting portion 113, and relative displacement is not easily caused, thereby ensuring connection strength between the flexible connecting member 4 and the display drive board 11.

In a specific embodiment, a manner of connecting the flexible connecting member 4 to the side that is of the display drive board 11 and that faces the rear cover is not limited. In an embodiment, the flexible connecting member 4 may be directly fastened to the display drive board 11. In this case, the middle member is a glue layer or another fastening structure used for connection. Alternatively, the flexible connecting member 4 is directly connected to the display drive board 11 via a flexible pad. In this case, the middle member is a flexible pad. Alternatively, another structure is further disposed below the display drive board 11. In this case, the flexible connecting member 4 only needs to be connected to the structure below the display drive board 11. For example, in an embodiment, an auxiliary support 243 may be provided between the first support portion 241 and the second support portion 242. The first support portion 241, the second support portion 242, and the auxiliary support 243 are of an integrated structure. The display drive board 11 is fastened to the auxiliary support 243, and the flexible connecting member 4 is fastened to the auxiliary support 243.

A specific type of the flexible connecting member 4 is not limited. The flexible connecting member 4 may be specifically a flexible cable or a flexible circuit board. This is not limited in this application, provided that the flexible connecting member 4 is flexible and can transmit a signal that needs to be transmitted.

When the flexible connecting member 4 is a flexible circuit board 41, the second hinge portion 32 has a radian surface at the opening 331, and a radius R of any area on the radian surface and a thickness d of the flexible circuit board 41 meet R≥12d. In this solution, when the display portion 1 and the non-display portion 2 are in a folded state, a bending angle of the flexible circuit board 41 is large, and the flexible circuit board 41 is not prone to be damaged. This helps improve a service life of the flexible circuit board 41.

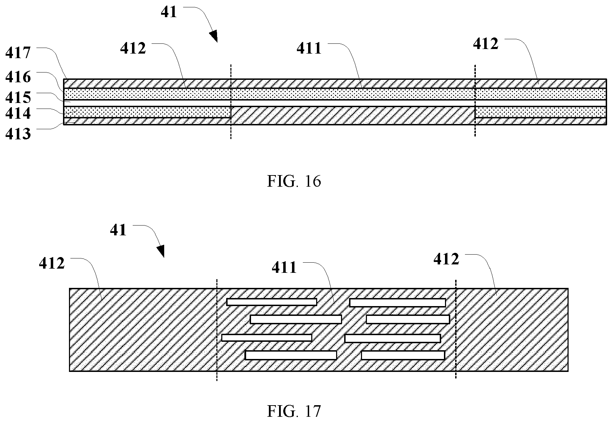

FIG. 16 is a diagram of a sectional view of a structure of a flexible circuit board according to an embodiment of this application. With reference to FIG. 6 and FIG. 16, the flexible circuit board 41 includes a bending region 411 and a fastening region 412. The fastening region 412 is a region fastened to a structure other than the flexible connecting member 4, and the bending region 411 is a region in which the flexible circuit board 41 is bent. For example, one end of the flexible connecting member 4 may be in a fastened state in an area other than the opening 331 of the accommodating slot 33. For example, if the flexible connecting member 4 is bonded to an inner wall of the accommodating slot 33, the inner wall region is the fastening region 412. In addition, the other end of the flexible connecting portion is fastened to the lower part of the display drive board 11, and the lower part may also be the fastening region 412 herein. An area between the two fastening regions 412 is the bending region 411. The two fastening regions 412 are respectively located at a part of the opening 331 and a part between the bottom cover 21 and the top cover 22 of the non-display portion 2.

Still refer to FIG. 16. The flexible circuit board 41 in the fastening region 412 includes a first flexible insulation layer 413, a first conductive layer 414, a substrate 415, a second conductive layer 416, and a second flexible insulation layer 417 that are sequentially disposed in a laminated manner. The bending region 411 includes the first flexible insulation layer 413, the first conductive layer 414, the substrate 415, and the second flexible insulation layer 417 that are sequentially disposed in a laminated manner. To be specific, compared with the fastening region 412, the bending region 411 lacks the second conductive layer 416. This reduces a rebound force of the bending region 411, and facilitates bending of the bending region 411. In addition, the flexible circuit board 41 includes two flexible insulation layers: the first flexible insulation layer 413 and the second flexible insulation layer 417, so that tensile resistance of the flexible circuit board 41 can be improved.

The first flexible insulation layer 413 and the second flexible insulation layer 417 may be specifically polyimide (Polyimide, PI). This is not limited in this application. The conductive layer may be specifically a copper layer, and the copper layer has good extensibility. This helps implement bending of the flexible circuit board 41.

In an area in which the fastening region 412 is adj acent to the bending region 411, the second conductive layer 416 may be electrically connected to the first conductive layer 414 through a via hole, to transmit an electrical signal.

FIG. 17 is a diagram of a top view of a structure of a flexible circuit board according to an embodiment of this application. Refer to FIG. 17. The bending region 411 may further have a hollow structure 418, to reduce the rebound force of the bending region 411 and facilitate bending of the bending region 411. A specific form of the hollow structure 418 is not limited. For example, the hollow structure 418 may be a structure including a plurality of round holes, square holes, polygonal holes, long-trip holes, or the like. The specific design is based on an actual rebound force requirement.

In this embodiment, the rebound force of the bending region 411 of the flexible circuit board 41 is 40 mN/mm to 100 mN/mm. In this range, the rebound force is suitable for bending of the flexible circuit board 41. This ensures that the bending region 411 can form a stable bending trajectory, and helps prevent obvious friction between the bending region 411 and other structures.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A foldable terminal, comprising a display portion, a hinge portion, and a non-display portion, wherein the display portion and the non-display portion are connected via the hinge portion, wherein
the display portion comprises a display screen assembly and an adapter circuit board, and the adapter circuit board is electrically connected to the display screen assembly; the non-display portion comprises a bottom cover, a top cover, and a display drive board, the bottom cover and the top cover form an accommodating cavity, the display drive board is disposed in the accommodating cavity, and a flexible connecting member is connected between the adapter circuit board and the display drive board; the hinge portion has an accommodating slot, the flexible connecting member is located in the accommodating slot, and an opening is provided on a side that is of the accommodating slot and that faces the non-display portion; a first wall surface is provided on a side that is of the accommodating slot and that faces the accommodating cavity, and a second wall surface is provided on a side that is of the accommodating slot and that faces away from the accommodating cavity; and at the opening, a distance between the first wall surface and the second wall surface gradually increases in a direction close to the non-display portion.

2. The foldable terminal according to claim 1, wherein the hinge portion comprises a first hinge portion and a second hinge portion, and the accommodating slot is provided between the first hinge portion and the second hinge portion.

3. The foldable terminal according to claim 1 or 2, wherein the non-display portion further comprises a stopper, the stopper is disposed in the accommodating cavity, the display drive board is disposed on a side that is of the stopper and that faces away from the hinge portion, the stopper has a limiting port, and the flexible connecting member passes through the limiting port.

4. The foldable terminal according to claim 3, wherein a distance between the limiting port and the bottom cover is greater than a distance between the limiting port and the top cover

5. The foldable terminal according to any one of claims 1 to 4, wherein the display drive board has a connecting portion, and the flexible connecting member is disposed around the connecting portion and is electrically connected to the connecting portion.

6. The foldable terminal according to claim 5, wherein the non-display portion comprises a support, the support comprises a first support portion, the first support portion is disposed on a side that is of a second end and that faces away from a first end, and the first support portion protrudes from a surface that is of the display drive board and that faces the top cover.

7. The foldable terminal according to claim 5 or 6, wherein the non-display portion comprises the support, the support comprises a second support portion, the second support portion is disposed on a side that is of the first end and that faces away from the second end, and the flexible connecting member between the first end and the second support portion is flattened.

8. The foldable terminal according to any one of claims 4 to 7, wherein the flexible connecting member is fastened to a side that is of the display drive board and that faces a rear cover via a middle member.

9. The foldable terminal according to any one of claims 1 to 8, wherein the flexible connecting member is a flexible circuit board.

10. The foldable terminal according to claim 9, wherein the second hinge portion has a radian surface at the opening, and a radius R of any area on the radian surface and a thickness d of the flexible circuit board meet R≥12d.

11. The foldable terminal according to claim 9 or 10, wherein the flexible circuit board comprises a bending region and a fastening region, the fastening region comprises a first flexible insulation layer, a first conductive layer, a substrate, a second conductive layer, and a second flexible insulation layer that are sequentially disposed in a laminated manner, and the bending region comprises the first flexible insulation layer, the first conductive layer, the substrate, and the second flexible insulation layer that are sequentially disposed in a laminated manner.

12. The foldable terminal according to any one of claims 9 to 11, wherein the flexible circuit board comprises the bending region and the fastening region, and the bending region has a hollow structure.

13. The foldable terminal according to any one of claims 9 to 12, wherein the flexible circuit board comprises the bending region and the fastening region, and a rebound force of the bending region is 40 mN/mm to 100 mN/mm.
